# EUROPEAN PATENT SPECIFICATION

(11) **EP 0 784 006 B1**
(45) Date of publication and mention of the grant of the patent: **22.08.2001**
(21) Application number: 97104501.8
(22) Date of filing: 06.10.1993
(51) Int. Cl.: B62D 43/00, B62D 43/04

(54) **Winch assemblies with torque limiters**
Winde mit Drehmomentbegrenzer
Treuil avec limiteur de couple

(30) Priority: 06.10.1992 CA 2079948
(43) Date of publication of application: 16.07.1997
(62) Divisional of application: 93922475.4
(73) Proprietor: TKA Fabco Corp., Windsor, Ontario N9A 6P7 (CA)
(72) Inventor: Dobmeier, Ludwig P., Windsor, Ontario N9C 2A3 (CA); Greaves, Jeffrey, McGregor, Ontario NOR 1JO (CA)
(74) Representative: Colmer, Stephen Gary

(56) References cited:
- US-A- 4 325 470
- US-A- 5 111 715

## Description

This invention relates to a winch assembly which can be used in releasing a tire carrier from a stored position in a vehicle, the carrier having been raised to that position by the winch. This is a division of 93922475.4 (EP-A-0662903) to which reference is made for other details.

Whilst the invention can be used to store a load, such as a tire under a boat on a trailer, in a raised or stored position and finds particular application to a spare tire, the invention can be used generally, where it is desirable to secure a load in a raised or stored position.

US-A-4325470 discloses a ratchet lever hoist which includes an overload clutch enclosed within the hoist handwheel. The handwheel is driven through a spline connection with the input drive hub of the hoist, and carries a plurality of first clutch disks. Second clutch disks are carried by a load brake member and frictionally engage the clutch disks through friction disks bonded to the second clutch disks. The clutch is preloaded to a torque capacity corresponding to the rated load of the hoist or a predetermined value over the rated load, such that the clutch will slip, preventing rotation of the load brake drive member when the torque capacity of the clutch is exceeded.

The invention is defined by the appended claims.

In the invention, a winch assembly comprises a winch housing and a torque limiter, the torque limiter being contained within a separate housing which is attachable to the winch housing. According to an embodiment of the invention, the torque limiter housing includes a flange and the winch housing includes a face on which are formed a plurality of clips. The torque housing can be pressed against this face so that the clips can be used to clip over the flange to hold the torque limiter against the winch housing.

In another embodiment of the invention, the torque limiter comprises a pair of plates and spring means for urging the plates into engagement with each other, such that rotation of one plate causes the other plate to rotate, provided that the torque between the two plates does not exceed a certain limit. The housing of the torque limiter is open on the side facing the winch assembly, whereby the attachment of the torque assembly to the winch housing tensions the spring means. The plates have engaging means disposed contacting surfaces and the spring means ensures engagement of the engaging means. One of the plates includes a nut portion for engagement with a handle, the other plate including means for engaging a drive mechanism of a winch in the winch housing. The spring means enables the engagement means to slip, at a predetermine torque, to provide overload protection for the winch.

Preferably, a safety device is included for securing a load carrier. In this case, the load carrier is moveable by operation of the winch assembly between a stored position and an accessible position remote from the stored position. The safety device comprises detent means, latching means moveable between a safety position, in which it is positioned with respect to the detent means when the load carrier is in the safety position, and a release position, where the load carrier is free to move to the accessible position. Operating means operate the latching means between the safety position and the accessible position. Activating means can be included which rotates to control the action of the operating means, such that the latching means is in the release position when the winch assembly is being operated to move the load from the stored position, and is in the safety position when the winch assembly is not being operated and the load carrier is in the stored position.

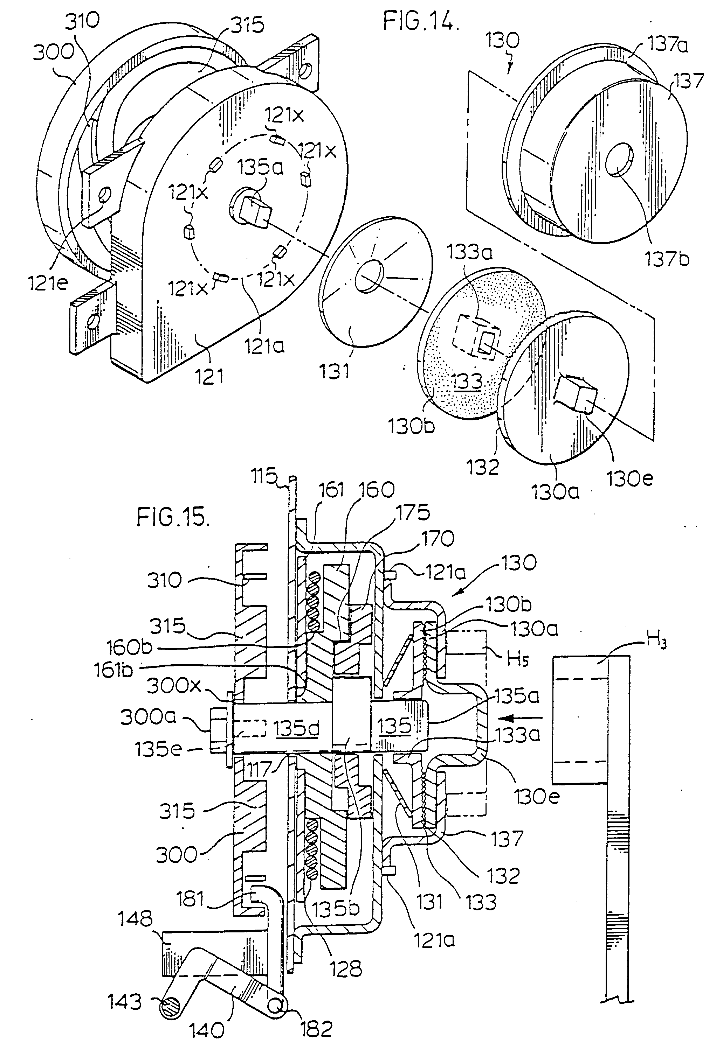

An embodiment of the invention will now be described with reference to Fig. 15 of the following drawings, in which drawings:
Figure 1 is a side plan view of a vehicle upon which a winch assembly is installed;
Figure 2 is a side plan view of a winch assembly of Figure 1 illustrating a latching mechanism thereof for securing a tire in a stored position under a vehicle;
Figure 3 is a view similar to that of Figure 2 illustrating the action for unlatching the securing mechanism of the winch assembly of Figure 2 when a crank is inserted for operation of the winch;
Figure 4 is a close up view of the latching portion illustrated in perspective and top plan view of the winch of Figure 1;
Figures 5 and 6 are perspective and side views respectively of the reduction gears of the winch;
Figures 7 and 8 are schematic illustrations of alternative arrangements;
Figure 9 is a close-up side plan view of the arrangement illustrated in Fig. 7;
Figure 10 is a perspective view of the arrangement illustrated in Figure 9;
Figure 11 is an exploded perspective view of the arrangement illustrated in Figures 9 and 10;
Figures 12 and 13 are schematic views of the latching of the carrier;
Figure 14 is an exploded perspective view of an improved torque limiter of the assembly;
Figure 15 is a cut-away view of the integrated assembly of an embodiment of the invention including the torque limiter of Figure 14;
Figure 16 is a partially cut-away side plan view of a winch including an actuator contained within the housing of the winch;
Figures 16A and 16B illustrate the operation of the winch of Figure 16;
Figure 17 is a schematic perspective view of the assembly of Figure 8; and
Figures 18 through 20 illustrate schematically the actuator 300 of the previous illustrations and the operation thereof.

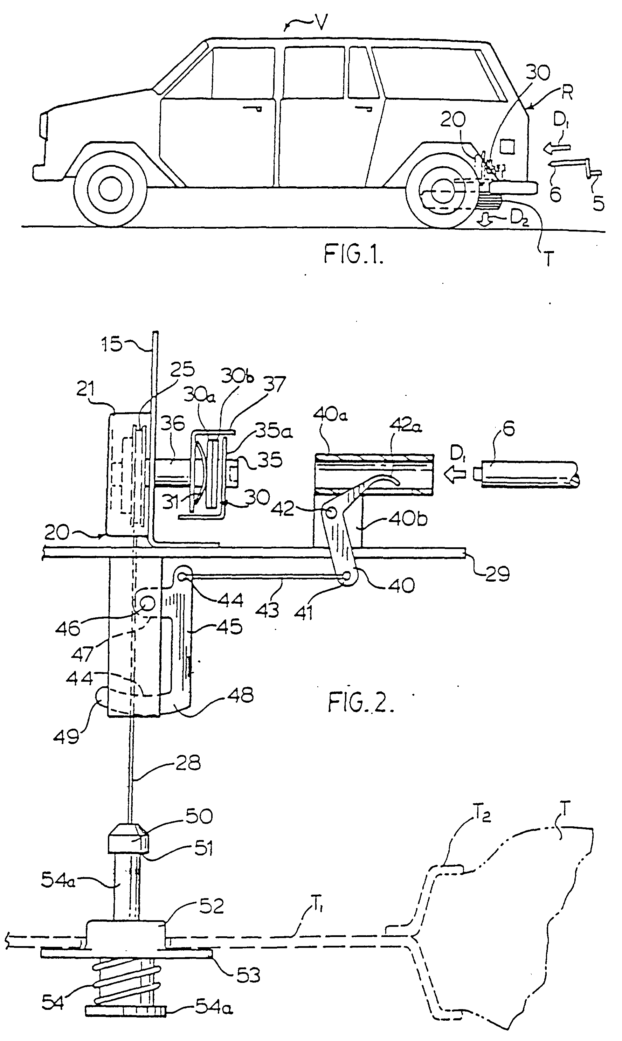

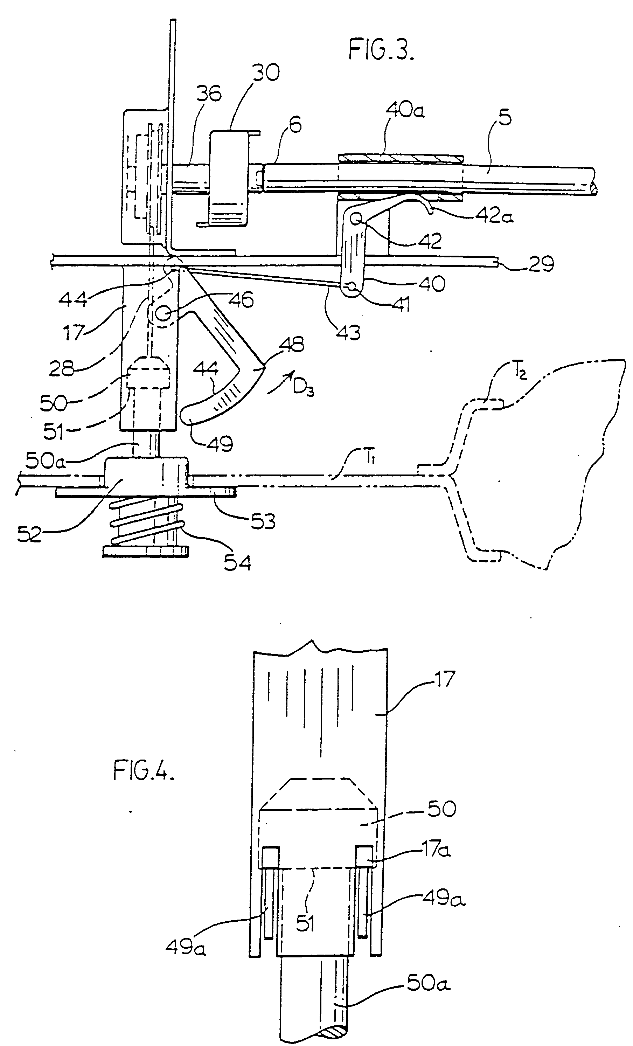

Referring now to Figure 1, there is illustrated a vehicle V having a winch assembly 20 mounted therewith. Separate from the winch assembly is a torque limiter 30. The tire T is conveniently stored under the vehicle V until such time as a user may access the tire by lowering the tire using the crank handle 5 at the end 6 and inserting it to access the torque limiting device 30 attached to the winch 20. The tire T may then be moved in a direction D2 to lower the tire to the ground. Handle 5 is inserted in a direction D1 in the sleeve 40A wherein a latching mechanism generally referred to as 40 is disposed. The end of the handle 6 engages the cam surface 42a of the lever 40 which is connected to the rod 43 at the end 41. The rod 43 is connected to a latching mechanism 45 at the end 44 thereof. Therefore the latching mechanism 45 rotates in response to the movement of the lever 40 to disengage the shoulder 51 of the head of the shank portion 50 so that the tire carrier portion and the tire may be lowered to the ground.

The assembly includes a mounted plate 29 to which a hollow cylinder 40a is attached, by attaching portions 40b to the bracket 29. When the end 6 of the crank 5 therefore is inserted in the cylinder 40a end 6 abuts the lever cam portion 42a which lever 40 is pivoted at pivot 42, the use of which will be described hereinafter. Therefore the end 6 of the crank 5 is inserted through to the hollow shaft portion 35 which receives the end 6 of the crank handle 5. The torque limiter 30 therefore includes two outer housing portions 35a and 36a. The half 35a includes the hollow shaft portion 35 which half 35a connects to the half 36a which connects to the shaft 36 which continues on to the winch portion 20.

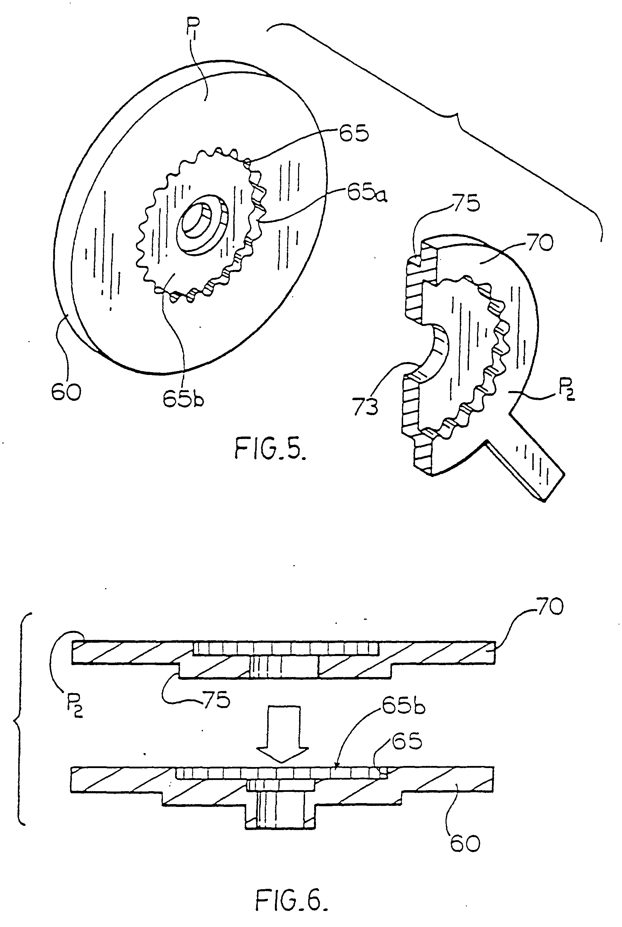

The shaft 36 then continues on to winch 20 including a reel 25, and a housing 21 mounted to the mounting bracket 15 which winch 20 includes gear reduction portion 70 and 60 as best seen in Figures 5 and 6 which are used for speed reduction purposes. The use of these gears will be described hereinafter. A resilient cable 28 is wound on to and off of the reel 25 by the rotation of the crank 5 in the required direction. Any winch structure would suffice and the details of the winch are not provided for this reason. The important portions of the invention are the lever portion 40 and the related latching portion 45 which are actuated by the insertion of the end 6 of the crank arm 5 through the cylinder 40a.

Disposed below the mounting plate 29 is a extension portion 17. The shank portion 50a and the head 50 having shoulders 51 adjacent the shank portion 50a are contained within this frame portion 17 when the tire is retained in its stored position. The latching portion 45 therefore engages the shoulder portions 51 of the tire carrier 50 which retains the tire in the stored position should the cable 28 break. Further the latch mechanism assists carrying the load of the tire in the normal stored position.

The tire T is attached to a rim T1 at flanges T2 as is typically known in the art. The tire is retained in the stored position by the latch 45 being secured to the shoulder 51 of the head affixed to the shank 50a and having a flange 53 extending underneath the rim T1. This flange 53 raises and lowers the tire T from the stored position to the accessible position as the cable 28 is wound out or wound in. A spring biased device 54 which abuts the flange 54a is provided to retain the correct tension in the unit. This is well known in the art.

When the crank 5 is inserted toward the winch 20 the end 6 of the crank arm passes through the sleeve 40a and abuts the lever 40 at the cam surface 42a thereof to cause such lever 40 to rotate at its pivot 42 and causes the rod 43 attached to the crank or lever 40 at the end 41 to move in a direction compatible to D1 and link with the latch mechanism 45 at point 44. Therefore as the rod 43 moves in the direction D1 it causes the latch mechanism 45 pivoted at 46 via cam portion 47 to pivot in a direction D3 as best seen Figure 3. Therefore the locking fingers 49 are removed from recess 17A of the frame portion 17 disengaging the finger portions 49 from underneath the shoulder 51 of the head portion 50 of the tire carrier 52.

The rotation of the latch in direction D3 allows the release or latching of the shoulder portion 51 of the tire carrier 52. The tire is shown in the accessible position about to be cranked up to its stored position and latched when handle 5 is removed from the cylindrical portion 40a to release the detent portion 42a and thereby allow the latch portion to return to its locked position under the shoulder 51 of the carrier 52 wherein the fingers 49 lock under the shoulder 51 on the abutting arcuate surface 44 thereof wherein the tire is therefore in the latched position.

Referring now to Figures 2 and 3 it can be readily seen that the torque limiting device 30 is contained separately from the winch assembly 20. Therefore the torque limiting device 30 includes two halves 36a and 35a which contain the torque limiting plates 30a and 30B which engage at all times and are held in constant engagement by the belleville spring 31. Therefore the spring 31 and the plates 30a and 30b are contained between the two portion 36a and 35a The shaft 35 is affixed for example by welding to portion 35a. The portion 35a and the torque plates 30a and 30b are also pressed against the other halve of the housing 36a. The portions 37 are used for connecting the two plates 35a and 36a loosely together. Therefore when the shaft 5 at end 6 is inserted within the hollow of the shaft 35 and turned the housing portion 36a and the shaft 36 which engages the winch 20 are also rotated. The torque limiting plates 30a and 30b include a multiplicity of teeth, which at a predetermined torque, the plates slip with respect to one another and thus provide overload protection for the winch 20. The torque limiting device 30 is a supplement to any winch and it may provide an add on package for a winch which has no torque overload protection by merely inserting this package 30 on a convenient shaft in between the housing 20 and the handle.

Referring now to figures 5 and 6 there are illustrated ring gear portions 60 stamped from a metal disk wherein the recess 65 including the teeth 65a are produced by stamping the ring gear 60 so as to raise a portion thereof out of the plane P1 of the ring gear 60. Similarly the planetary gear portion 70 includes teeth 75 which are formed by raising the teeth 75 out of the plane P2 of the planetary gear 70. In doing so a pocket is provided behind the section having the teeth 75 thereon. This therefore provides a simple method of forming a ring gear and a planetary gear which is easy to manufacture. The ring and planetary gear inter fit as best shown in Figure 6 wherein the teeth 75 which extends laterally away from the plain P2 of the ring gear 70 are inserted within the opening 65b of the ring gear 60 so that the teeth 65 of the ring gear engage the teeth 75 of the planetary gear. Within the winch 20 there is an offset which is inserted within the opening 63 of the ring gear 60 so that the planetary gear may wobble about the opening 73 therein and thus provide gear reduction which is known as taumel gear reduction. Therefore within the winch 20 there is provided taumel gear reductions portions including a ring gear 60 and an planetary gear 70 which are manufactured by a stamping process from flat circular plates and have teeth on the ring gear and teeth on the planetary gear which inter engage having been formed by metal stamping techniques.Generally there is one less tooth formed with the planetary gear than the ring gear to effect the taumel principle.

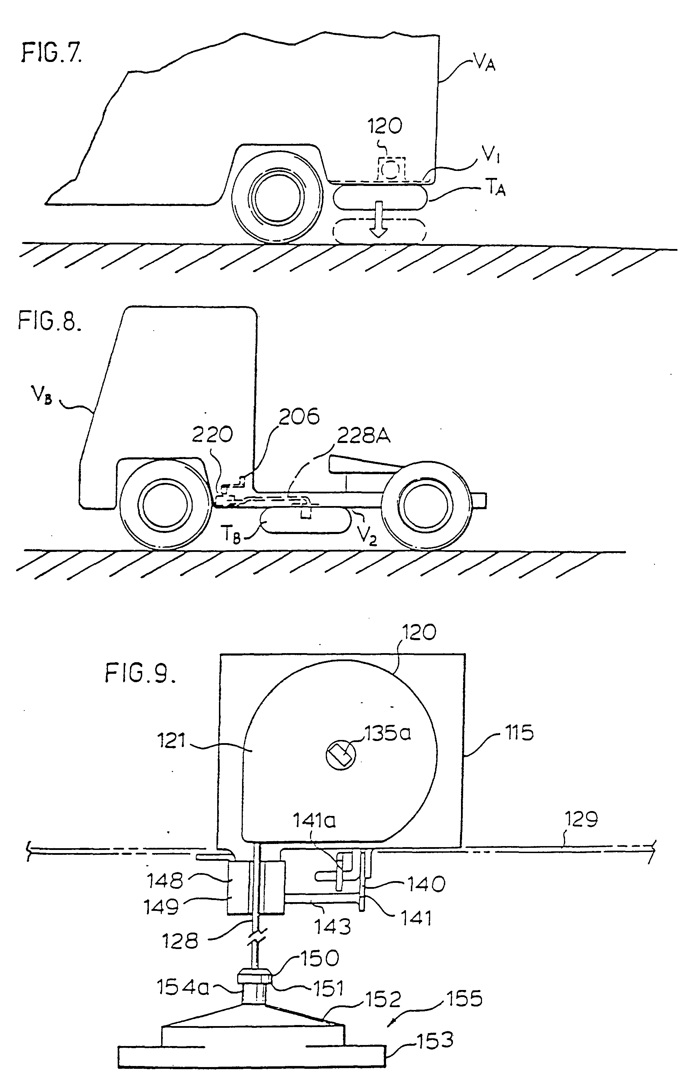

Figures 7 and 8 illustrate winches 120 and 220, installed adjacent the bottom V1 and V2 of vehicles VA and VB, for moving a tire TA and TB from a stored position to an accessible position. Specifically Figure 8 illustrates a winch 220 installed at a distance from the tire TB separated therefrom by an cable access tube 228A. Further the winch 220 is disposed horizontally whereas winch 120 is disposed vertically. Handle 206 is provided in Figure 8 to rotate the winch 220.

Referring now to Figures 9, 10 and 11 there is illustrated the winch 120 of Figure 7, the winch components being contained between the housing 121 and the backing plate 115 similar to the unit described in relation to Figures 2 and 3. Nut 135a is provided for access by the handle H at end 106a thereof.The winch 120 is attached to the bottom V1 of vehicle VA at 129 by exemplary mounting holes 115b so that the portions illustrated extend through the bottom 129 toward the tire TA. Alternatively the flange 115a may be welded to the bottom 129 of the vehicle. In this manner the cable 128 may be lowered and raised securely to and from the stored and accessible positions. The tire carrier 150 is provided at one end of the cable and operates in a similar manner to the assembly of Figures 2 and 3 with the exceptions as will be described as follows.

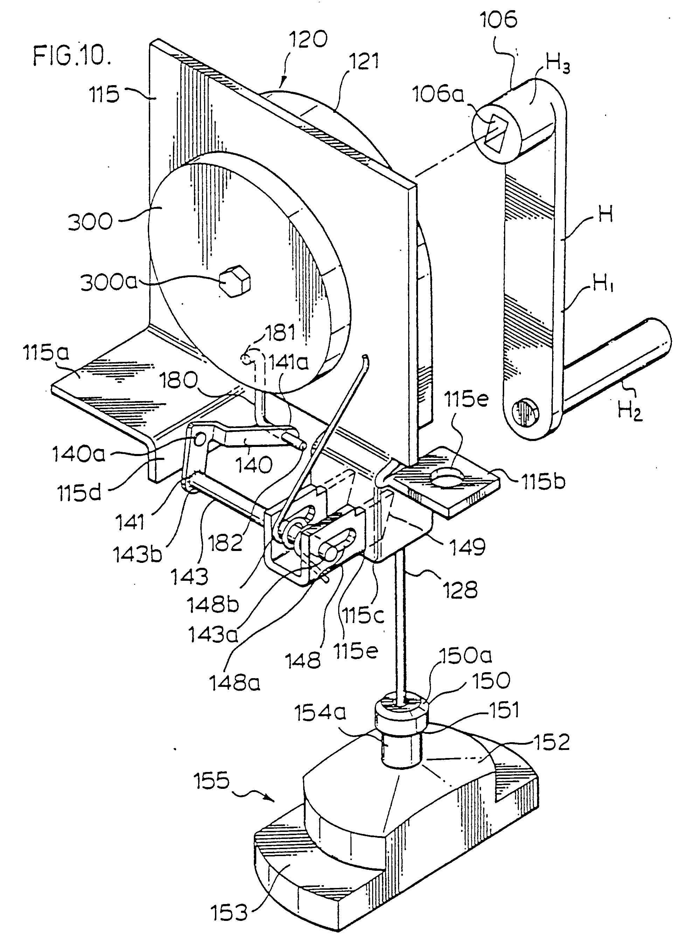

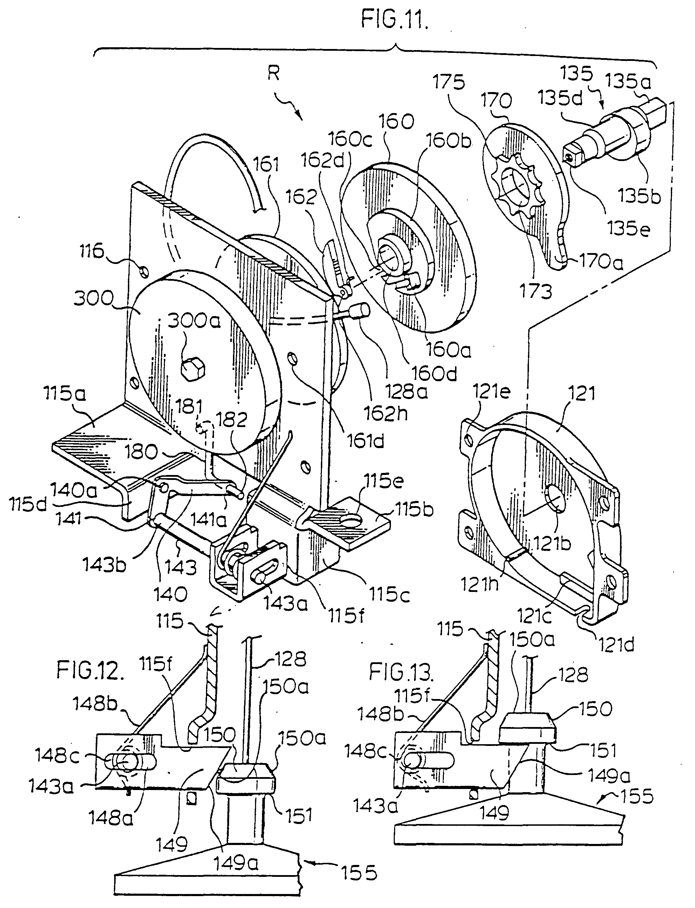

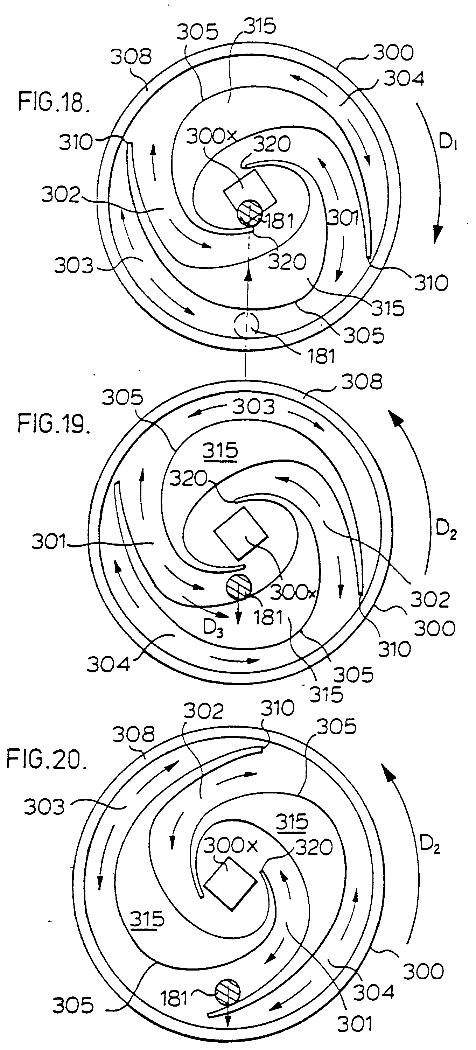

The backing plate 115 is formed from a single stamping which includes mounting portions 115b and 115a and flanges 115c and 115d. The portion 115c has a passage similar to that illustrated in Figure 2 to provide for the passage of cable 128. The winch 120 and the components thereof are housed within the cover 121 and the backing plate 115. On the other side of the backing plate is provided the actuator 300 fixed in position by hexagonal threaded fastener 300a. As best seen in Figures 18 through 20 there is provided on the side of the actuator nearest bracket 115 substantially spiral shaped control paths 301 and 302 within which end 181 of serpentine rod 180 is disposed. When the winch 120 is operated by the handle H, the actuator 300 is also rotated. The handle H2 is operated and is connected by arm H1 to end H3 wherein is disposed at opening 106a to engage end 135a of of spindle 135a. When the winch 120 is operated in a clockwise direction thereby paying out the cable 128, the actuator 300 will rotate in a counter clockwise direction (when viewed in relation to Figure 10)moving the rod end 181 towards the perimeter of the actuator which causes the lever arm 141a of lever 140 near the other end 182 of rod 180 to move about pivot 140a fixed to flange 115d of bracket 115. The leg 141 of lever 140 is fixed at 143b to rod 143 which in turn engages with openings 148a to locking member 148 which works substantially the same as item 48 of Figure 2 with the exception that item 148 moves in a more linear fashion than item 48 of Figure 2. A torsion spring 148b is provided to bias member 148 within windows 115f of flange 115c to the locked position. Therefore when the carrier is in the position shown in Figure 13 as the winch 120 is rotated the actuator is also rotated to move end 181 of rod 180 in the manner described above so as to remove the forks 149 sufficiently away from the carrier shoulder 151 to allow the cable 128 to be payed out and the tire to be moved to the accessible position. When the winch 120 is rotated back to the stored position, after a tire change and presumably with a repaired tire thereon, the rod end 181 will be moved along paths 301 and 302 towards the centre nut 300a returning the forked portions 149 to the latched position. As the carrier 155 returns to the latched position the head 150 abuts the tapered surface 149a of forks 149 at cam surface 150a thereby forcing the forks 149 away from the head 150 as best seen in Figure 12 until the forks are free to return under the shoulders 151 of head 150 as best seen in Figure 13,being biased to do so by torsion spring 148b.

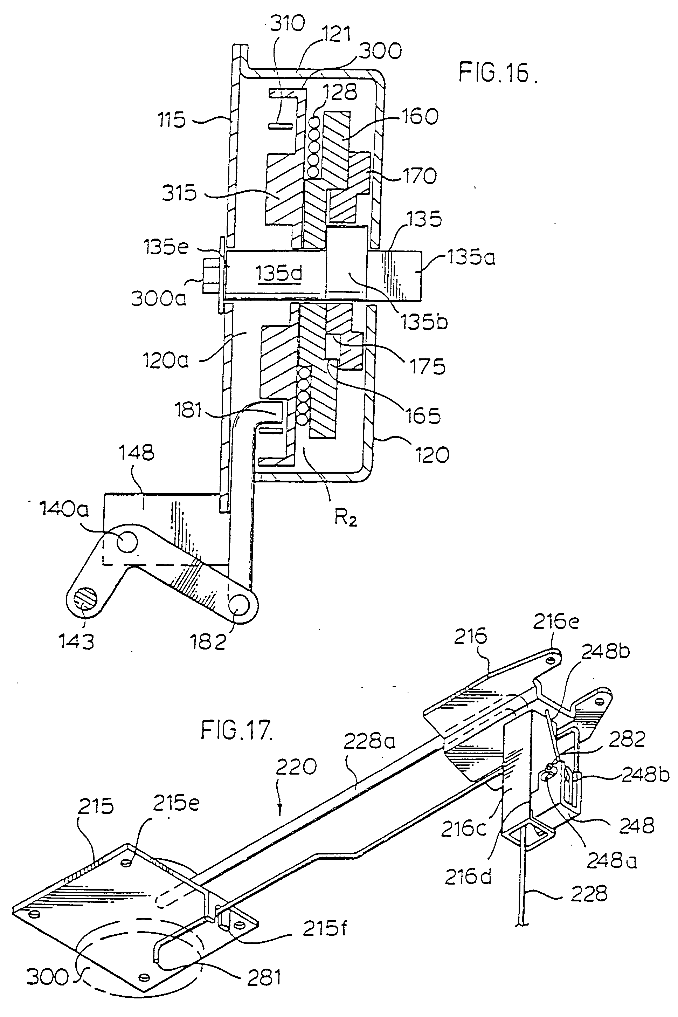

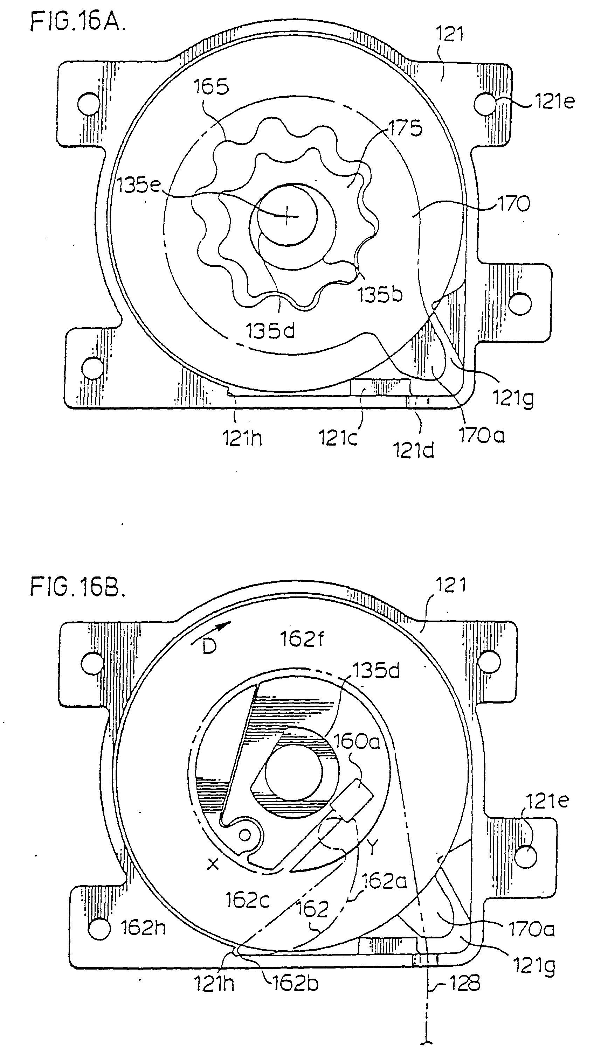

As best seen in Figures 14, 15 and 16 cable 128 is anchored in slot 160a of circular plate 160 which plate forms one half of the winch reel R defined with the other reelplate 161.As shown the cable will therefore wind on the reel R in a clockwise direction (when observed from the housing end 121of Figure 14) in this embodiment only, and accumulates one layer above another on surface 160b when the winch is operated. A housing 121 is provided at one end of the winch components which is mounted via opening 121e (via fasteners not shown)to the bracket 115 also providing the other closing end of the winch 120. A spindle 135 therefore extends through the opening 121b of housing 121 and an opening 117 in the mounting plate 115 as best seen in Figure 15. A nut end 135a is therefore provided for access by the handle H or for engagement with a separate clip on torque limiter as best seen in Figures 14 and 15. The spindle 135 therefore passes through an opening 173 of gearplate 170 which has gears 175 provided therewith, having nine teeth. A tail portion 170a is provided with gearplate 170 to prevent the free rotation thereof in operation as best seen in Figure 16A. The spindle 135 therefore engages gearplate 170 proximate opening 173 at eccentric portion 135b of spindle 135, the opening 173 being slightly larger than the eccentric portion 135b. The eccentric portion therefore wobbles within the opening 173 or gearplate 170 in use.

As best seen in Figure 15 the spindle portion 135d therefore passes thereafter through, the opening 160d of reelplate 160,the opening 161b of reelplate 161, the opening 117 of bracket 115,and finally through the opening 300x of the disk shaped actuator 300 whereat a hexagonal threaded fastener 300a engages opening 135e, as best seen in Figure 15, thereby fastening and retaining all of the winch components.

The reelplate 160 is constructed similarly to the structure illustrated in Figure 5 and has a ring gear 165 formed on the side thereof nearest the gearplate 170, as best seen in relation to Figure 16A, which has ten engaging teeth to engage the nine teeth 175 of gearplate 170. This difference of one tooth in the number of teeth between the gears 165 and 175 causes a speed reduction but increased torque in the operation of the winch which speed reduction principle is known and described in many winch assemblies in the prior art. Therefore as the handle H is operated in a clockwise direction (when observed in Figure 14) , the spindle 135 will also rotate in a clockwise direction; the eccentric portion 135b operating within the opening 173 of gearplate 170 with the nine teeth 175 engaging the ring gear teeth 165, numbered ten, of reelplate 160 thereby driving the reel R in a direction so as to takeup cable.

The cable 128 is anchored in opening 160a of reelplate 160 via fastener 128a in a conventional manner. Therefore as the winch is operated the cable will be taken up in the clockwise direction and payed out in the counterclockwise direction. Of course this may be reversed in design. As best seen in relation to Figures 11 and 16B there is provided as a part of the bottom 160b of reel R, a resiliently biased arm 162 provided as a anti-backdriving feature for the winch 120. The arm 162 includes an arcuate side 162a which abuts in use the first coil of cable 128 and is retained in position by the first coil at position X,until the cable is payed out to the position Y in Figure 16B, whereat the arm 162 bei. resiliently biased outward by torsion spring 162d upon further rotation of the winch engages the detent 121h of the housing 121 at 162b thereby preventing the further rotation of the reel R and the risk of the- winch backdriving and taking up cable with the further rotation of the winch 120 thereby damaging the cable. The arm 162 includes a torsion spring 162d having two ends. The first end 162f extends along the arm in a long groove cut in the arm to ensure the proper biasing and motion of the arm, and the second end 162e extend towards the reelplate 160 and is anchored in an opening in reelplate 160(not shown). A pin extends through opening 162h to anchor the arm 162 to reelplate 161 at opening 161d.Generally an arm such as arm 162 is taught in the art in United States Patent 2,053,976 issued September of 1936.

Referring now to Figures 14 and 15 there is illustrated the same winch structure of Figures 9 through 13 with the addition that a torque limiting unit 130 is provided which fastens to the side of housing 121 by annular ring 121a which includes portions 121x which act as clips to fasten over flange 137a of torque limiter housing 137. The housing and the contents thereof when aligned so as to engages the end 135a of spindle 135 as shown therefore clips in position when the flange 137a is pressed over clips 121x causing the clips to flex downwardly until they pass the flange and clip thereover to retain the housing 137 in position. The clips are formed with the annular ring 121a of housing 121 with separations defined between the portions 121x and the ring 121a to allow the independent flexing of the clips.

The torque limiter 130 is similar in design to that illustrated in Figures 1 through 6 with the exception that it is joined to the winch housing as a supplementary member utilizing one side of the winch housing 121 to act as a backing plate for housing 137 to retain the torque limiter components.A spring therefore is provided to ensure the engagement of the teeth 132, 133 disposed upon adjacent surfaces of of gears 130a and 130b as best seen in Figure 15. Member 130a also includes a nut portion 130e for engagement with the handle H in use.Member 130b includes a spindle engaging portion 133a to engage portion 135a of the spindle 135 and hence drive the winch 120 in the manner described previously.Therefore if the handle H accesses the nut 130 formed with the gear 130 via portion H3 thereof, H3 engages the seal H5 of the assembly (which is recommended as a barrier to dirt and moisture but is optional) and nut portion 130e of the torque limiter extending through opening 137b of the housing 137. As the handle H is rotated the nut 130e will cause the gear 130a to rotate which because of the engagement of teeth 132 and 133 will cause the gear 130b to rotate which will in turn cause spindle end 135a to rotate as engaged by portion 133a of gear 130b. The teeth 132 and 133 remain in engagement as biased by belleville spring 131 which under normal operating conditions ensure the engagement of teeth 132 and 133. The torque limiting plates 130a and 130b include the multiplicity of teeth 132 and 133, and at a predetermined torque, the plates slip with respect to one another and thus provide overload protection for the winch 120. The torque limiting device 130 is a supplement to any winch and it may provide an add on package for a winch which has no torque overload protection by merely inserting this package 130 on the winch housing thereof as illustrated in Figure 15 and described above. The balance of the winch assembly 120 and the operation thereof remains as described above.

Referring now to Figure 16 there is illustrated a winch assembly as previously described with the exception that the actuator 300 replaces the reel plate 161 in defining reel R2 with reelplate 160. Otherwise the operation thereof is identical to previous descriptions of the assembly. However the embodiment of Figure 16 presents a more compact package.Further the torque limiting features illustrated and described in relation to Figure 15 may be incorporated therewith.

Referring now to Figure 17 there is illustrated the winch assembly 220 as illustrated in relation to Figure 8 which separates the components previously described in order to provide a package which may be oriented horizontally. Therefore two mounting plates 215 and 216 are provided. The winch 220 being fastened in use to plate 215 at the bottom of the vehicle and including all of the features previously described including the actuator 300 for engagement with rod end 281 of rod 280. A tube 228a is provided to smoothly carry the cable 228 from the winch 220 to the tire carrier in a manner consistent with the previous descriptions. The rod 280 operates in a manner consistent with the operation of rod 180 described and illustrated above. The latch bracket 216 is mounted under the vehicle via opening 216e, and carries a latch 248 engageable in openings 216d disposed with downwardly extending bracket 216c in a manner as previously described. The rod end 282 rides in slots 248a in latch 248 which as previously described is resiliently biased to the latched position of the carrier by the torsion spring 248b. The rod 280 is guided by portion 215f and an equivalent portion on member 216(not shown) to ensure rod 280 travels in a substantially linear path to provide linear motion of latch 248 when engaging and disengaging the carrier head 150. Otherwise the operation of the winch 220 and rod 280 in relation to actuator 300 are consistent with the description in relation to Figures 9 through 15 above.

Referring now to Figure 16A there is illustrate the wobbling effect of plate 170 and the gears 175 thereof with respect to the ring gear 165 of reel plate 160 as driven by eccentric 135b of spindle 135. The plate 170 includes a tail portion 170a which is retained in area 121g of the space defined in housing 121 so as to prevent movement of the plate 170 beyond the bounds set by 121g.The motion of the eccentric will cause the gear 175 to drive the reelplate 160 at a speed reduction as is known and described above.

Referring now to Figure 18 through 20 and Figures 14, 15 and 16 there is illustrated the actuator 300 being molded from nylon or plastic with the opening 300x provided therewith for the fastening of the actuator in position as described previously.Substantially arcuate paths 301 and 302 are provided therewith to control the motion of rod end 181 (or 281) when the winch 120 (or 220) is operated. The paths 301 and 302 are defined between two substantially spiral shaped raised portions 305 which include a centre broad portion 315 and flexible flange portions 310 and 320 at the ends of the raised portions 305.Also provide to retain the rod end in use is a raised ring 308. The raised portions 305 therefore control the rod end 181 therebetween as the actuator 300 is rotated. For example when the tire is in the stored position and the latch 148 latches the carrier head 150, it may be desired to to lower the tire for access. The rod end therefore begins at the position as shown in Figure 18 proximate the centre of the actuator 300. If the actuator were rotated in a direction D1 the rod will remain in its position of Figure 18 and the flexible flanges 320 will flex outwardly away from the rod end 181 to allow it to pass in one direction only. However when the actuator 300 is rotated in the direction D2 it will be forced to move along the substantially spiral path 301 for one quarter of a turn, not being able to pass the flexible flange ends 320 of the actuator, until the rod end reaches a position near the perimeter of actuator 300. The rod end then travels in paths 303 and 304 bounded by the raised portions 305 and the raised collar 308, passing the flexible flanges 310 in one direction only. The continued rotation of the actuator retains the rod end 181 in the control paths 303 and 304. In moving the rod end 181 from near the centre of the actuator 300 to near the perimeter of the actuator 300, the rod 180 therefore has been moved an equivalent linear amount to the radius of the actuator so as to disengage the latch 148 form the carrier head shoulder 151 as previously described and to allow the lowering of the carrier and the tire to the accessible position. Therefore continued rotation of the winch will not change the position of the rod end 181 until such time as the tire is returned to the stored position and the actuator is rotated in direction D1 whereat the rod end 181 will not be able to pass the flexible flange 310 and will be forced to return along arcuate path 301 or 302 to near the centre of the actuator 300 whereat the rod end 181 will pass the flexible flanges 320 continually until the tire is raised and latched as described previously in relation to Figures 12 and 13.

All of the components of the winch assemblies previously described may be manufactured from resilient materials such as nylon or other thermoplastic materials in order to reduce the weight of the assembly. However this is not essential. In doing so weight savings may be realized. Further the embodiments of the invention considerably reduce the number of components of the assembly and hence reduce the weight and increase the reliability thereof. For example a winch assembly of Figure 8 may be reduced from previously known structures from 43 parts in total to 28 parts,a 34% savings, at a weight reduction from 4.75 pounds to 3.5 pounds, a 26% savings in weight.

## Claims

1. A winch assembly comprising a winch housing (120) and a torque limiter (130) characterized in that the torque limiter (130) is contained within a separate housing (137) and is attached to the winch housing (121).

2. A winch assembly according to Claim 1, wherein the torque limiter housing (137) includes a flange (137a) and the winch housing (121) includes a face having a plurality of clips (121x) formed thereon which, when the torque housing (137) is pressed there against, clip over the flange (137a) to hold the torque limiter (131) against the winch housing (121).

3. A winch assembly according to Claim 1 or 2, wherein the torque limiter (130) comprises a pair of plates (130a, 130b) and spring means (131) for urging the plates into engagement with each other such that rotation of one plate (130b) causes the other plate (130a) to rotate, provided that the torque between the two plates does not exceed a certain limit; the housing of the torque limiter (130) being open on the side facing the winch assembly, whereby the attachment of the torque assembly to the winch housing tensions the spring means.

4. A winch assembly according to Claim 3 wherein said plates have engaging means (132, 133) disposed upon contacting surfaces thereof, said spring means (131) ensuring engagement of said engaging means (132, 133); one of the plates (130a) also including a nut portion (130e) for engagement with a handle (H3), the other plate (130b) including means (133b) for engaging a drive mechanism (135) of a winch in the winch housing (121); said spring means (131) enabling the engagement means to slip, at a predetermined torque, to provide overload protection for said winch.

5. A winch assembly according to any previous claim including a safety device (148) for securing a load carrier (155).

6. A winch assembly according to Claim 5 wherein the load carrier (155) is moveable by operation of the winch assembly between a stored position and an accessible position remote from the stored position, and the safety device comprises:
detent means (151);
latching means (148) moveable between (a) a safety position, in which it is positioned with respect to said detent means (151) when the load carrier (155) is in the safety position, and (b) a release position, where the load carrier is free to move to the accessible position; and
operating means (180) for operating the latching means (148) between the safety position and the accessible position.

7. A winch assembly according to Claim 6 further comprising actuating means (300) which rotates to control the action of the operating means (180), such that the latching means (148) is in the release position when the winch assembly is being operated to move the load from the stored position, and is in the safety position when the winch assembly is not being operated and the load carrier (155) is in the stored position.

## Patentansprüche

1. Windenbaugruppe bzw. -zusammenbau mit einem Windengehäuse (120) und einem Drehmomentbegrenzer (130) dadurch gekennzeichnet, dass der Drehmomentbegrenzer (130) in einem getrennten Gehäuse (137) enthalten ist und an dem Windengehäuse (121) angebracht bzw. befestigt ist.

2. Windenbaugruppe nach Anspruch 1, wobei das Drehmomentbegrenzer-Gehäuse (137) einen Flansch (137a) aufweist und das Windengehäuse (121) eine Oberfläche aufweist mit einer Mehrzahl von Klammern bzw. Clips (121x), welche darauf ausgebildet sind, welche, wenn das Drehmomentbegrenzer-Gehäuse (137) dagegengedrückt wird, über den Flansch (137a) klammern bzw. sich daran befestigen, um den Drehmomentbegrenzer (131) gegen das bzw. an dem Windengehäuse (121) zu halten.

3. Windenbaugruppe nach Anspruch 1 oder 2, wobei der Drehmomentbegrenzer (130) ein Paar von Platten (130a, 130b) und eine Federvorrichtung (131) aufweist zum Zwingen bzw. Drängen der Platten in einen Eingriff miteinander, so dass die Drehung von einer Platte (130b) bewirkt, dass sich die andere Platte (130a) dreht, vorausgesetzt, dass das Drehmoment zwischen den zwei Platten nicht eine bestimmte Grenze überschreitet; das Gehäuse des Drehmomentbegrenzers (130) ist offen auf der Seite, welche der Windenbaugruppe gegenüberliegt, wodurch das Anbringen bzw. Befestigen der Drehmomentbaugruppe an dem Windengehäuse die Federvorrichtung spannt.

4. Windenbaugruppe nach Anspruch 3, wobei die Platten eine Eingriffs- bzw. Einrast-Vorrichtung (132, 133) aufweisen, welche auf ihren Kontaktoberflächen angeordnet sind, wobei die Federvorrichtung (131) ein Eingreifen bzw. Einrasten der Eingriffs- bzw. Einrast-Vorrichtung (132, 133) sicherstellt; eine der Platten (130a) umfasst auch einen Nuten-Bereich (130e) zum Eingreifen bzw. Einrasten mit einem Halter bzw. Stiel (H3), die andere Platte (130b) weist eine Vorrichtung (133b) auf zum Eingreifen bzw. Einrasten mit einem Antriebsmechanismus (135) einer Winde in dem Windengehäuse (121); wobei die Federvorrichtung (131) es der Eingriffs- bzw. Einrast-Vorrichtung ermöglicht, bei einem vorgegebenen Drehmoment zu Rutschen bzw. Schlupfen bzw. Gleiten, um einen Überlastschutz für die Winde zur Verfügung zu stellen.

5. Windenbaugruppe nach einem der vorhergehenden Ansprüche mit einer Sicherheitsvorrichtung (148) zum Sichern eines Lastträgers (155).

6. Windenbaugruppe nach Anspruch 5, wobei der Lastträger (155) bewegbar ist durch die Betätigung der Windenbaugruppe zwischen einer Lagerposition und einer zugänglichen Position, welche von der Lagerposition entfernt ist, und die Sicherheitsvorrichtung umfasst:
eine Rast- bzw. Arretier- bzw. Sperr-Vorrichtung (151);
eine Sperr- bzw. Verschluss- bzw. Klink-Vorrichtung (148), welche bewegbar ist zwischen (a) einer Sicherheitsposition, in welcher sie in Bezug auf die Rastvorrichtung (151) positioniert ist, wenn der Lastträger (155) in der Sicherheitsposition ist, und (b) einer Freigabeposition, in welcher der Lastträger frei für eine Bewegung zu der zugänglichen Position ist; und
einer Betätigungs- bzw. Betriebs-Vorrichtung (180) zum Betätigen der Sperrvorrichtung (148) zwischen der Sicherheitsposition und der zugänglichen Position.

7. Windenbaugruppe nach Anspruch 6, weiter aufweisend eine Betätigungs- bzw. Schaltvorrichtung (300), welche sich dreht, um die Aktion bzw. Tätigkeit der Betriebsvorrichtung (180) so zu steuern bzw. zu regeln, dass die Sperrvorrichtung (148) in der Freigabeposition ist, wenn die Windenbaugruppe betätigt bzw. betrieben wird, um die Last von der Lagerposition zu bewegen, und in der Sicherheitsposition ist, wenn die Windenbaugruppe nicht betätigt bzw. betrieben wird und der Lastträger (155) in der Lagerposition ist.

## Revendications

1. Treuil comprenant un boîtier de treuil (121) et un limiteur de couple (130), caractérisé en ce que le limiteur de couple (130) est contenu dans un boîtier séparé (137) et il est fixé au boîtier de treuil (121).

2. Treuil selon la revendication 1, dans lequel le boîtier de limiteur de couple (137) comporte une bride (137a) et le boîtier de treuil (121) présente une face sur laquelle sont formées une pluralité d'agrafes (121x) qui pincent la bride (137a), lorsqu'on presse le boîtier de limiteur de couple (137) contre les dites agrafes, afin de maintenir le limiteur de couple (130) contre le boîtier de treuil (121).

3. Treuil selon la revendication 1 ou 2, dans lequel le limiteur de couple (130) comprend deux plaques (130a, 130b) et des moyens élastiques (131) pour rappeler les plaques en contact mutuel de sorte que la rotation d'une plaque (130b) entraîne la rotation de l'autre plaque (130a) à condition que le couple entre les deux plaques ne dépasse pas une certaine limite ; le boîtier du limiteur de couple (130) étant ouvert sur le côté en regard du treuil de sorte que la fixation du boîtier de limiteur de couple au boîtier de treuil met en tension les moyens élastiques.

4. Treuil selon la revendication 3, dans lequel les dites plaques comportent des moyens d'enclenchement (132, 133) disposés sur leurs surfaces de contact, les dits moyens élastiques (131) assurant l'accouplement des dits moyens d'enclenchement (132, 133) ; une des plaques (130a) comportant également une partie formant écrou (130e) pour accouplement à une manivelle (H3), l'autre plaque (130b) comportant des moyens (133a) pour accouplement à un mécanisme d'entraînement (135) d'un treuil dans le boîtier de treuil (121) ; les dits moyens élastiques (131) permettant le glissement des moyens d'enclenchement, à un couple prédéterminé, afin d'assurer une protection contre les surcharges pour le dit treuil.

5. Treuil selon une quelconque des revendications précédentes, incluant un dispositif de sécurité (148) pour la fixation d'un élément porteur de charge (155).

6. Treuil selon la revendication 5, dans lequel l'élément porteur de charge (155) est déplaçable par l'action du treuil entre une position de rangement et une position accessible distante de la position de rangement, et le dispositif de sécurité comprend :
des moyens d'arrêt (151 ) ;
des moyens de verrouillage (148) déplaçables entre (a) une position de sécurité, dans laquelle ils sont en prise avec les dits moyens d'arrêt (151) lorsque l'élément porteur de charge (155) est dans la position de sécurité, et (b) une position de libération dans laquelle l'élément porteur de charge peut venir librement à la position accessible ; et
des moyens de manoeuvre (180) pour déplacer les moyens de verrouillage (148) entre la position de sécurité et la position accessible.

7. Treuil selon la revendication 6, comprenant en outre des moyens de commande (300) qu'on fait tourner pour commander l'action des moyens de manoeuvre (180), d'une manière telle que les moyens de verrouillage (148) sont dans la position de libération lorsqu'on actionne le treuil pour déplacer la charge à partir de la position de rangement, et ils sont dans la position de sécurité lorsque le treuil n'est pas actionné et que l'élément porteur de charge (155) est dans la position de rangement.
